# EUROPÄISCHE PATENTSCHRIFT

(11) **EP 2 393 686 B1**
(45) Veröffentlichungstag und Bekanntmachung des Hinweises auf die Patenterteilung: **28.11.2012**
(21) Anmeldenummer: 10700315.4
(22) Anmeldetag: 08.01.2010
(51) Int. Cl.: F16H 63/46, B60K 17/28, F16D 48/06

(54) **VERFAHREN ZUM BETREIBEN EINES GETRIEBES**
METHOD FOR OPERATION OF A TRANSMISSION
PROCÉDÉ DE FONCTIONNEMENT D'UNE TRANSMISSION

(30) Priorität: 09.02.2009 DE 102009000708
(43) Veröffentlichungstag der Anmeldung: 14.12.2011
(73) Patentinhaber: ZF Friedrichshafen AG, 88038 Friedrichshafen (DE)
(72) Erfinder: STAUDINGER, Joachim, 88214 Ravensburg (DE); HERTER, Peter, 88212 Ravensburg (DE); GROENER, Wolfgang, 88048 Friedrichshafen (DE)
(86) Internationale Anmeldenummer: PCT/EP2010/050147
(87) Internationale Veröffentlichungsnummer: WO 2010/089163

(56) Entgegenhaltungen:
- WO-A1-2004/035344
- DE-A1- 19 708 929
- DE-A1-102007 010 829

## Beschreibung

Die Erfindung betrifft ein Verfahren zum Betreiben eines Getriebes eines Kraftfahrzeugs.

Gruppengetriebe mit einem mehrstufigen Hauptgetriebe und einer diesem nachgeschalteten Bereichsgruppe sowie mit einer dem Hauptgetriebe vor - oder nachgeschalteten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

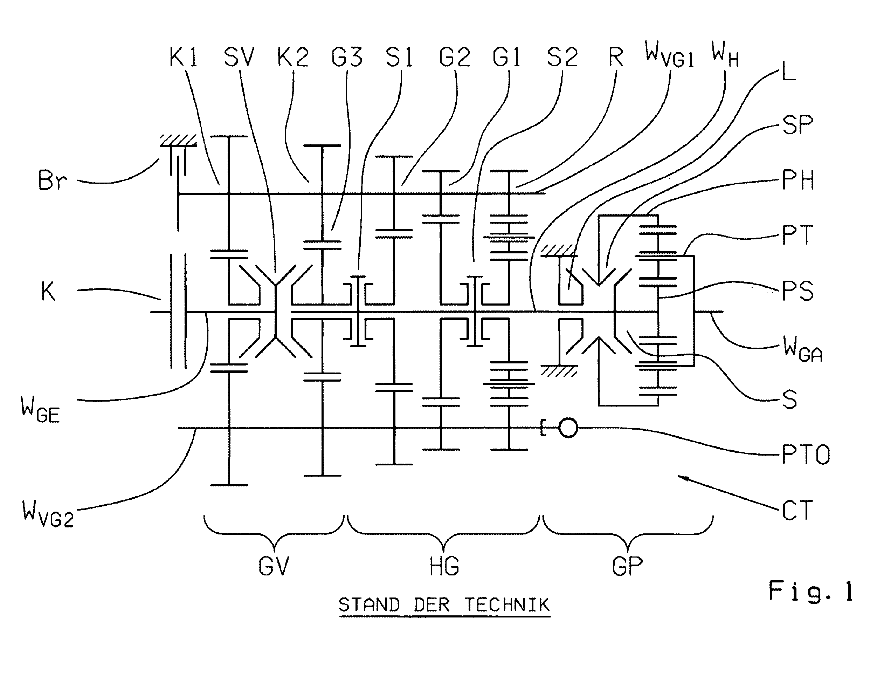

Fig. 1 zeigt ein Schema eines von der Anmelderin stammenden Gruppengetriebes der sogenannten AS-Tronic-Familie. Das in Fig. 1 dargestellte Gruppengetriebe CT umfasst ein Hauptgetriebe HG, eine dem Hauptgetriebe HG antriebstechnisch vorgeschaltete Vorschaltgruppe bzw. Splitgruppe GV sowie eine dem Hauptgetriebe HG nachgeschaltete Bereichsgruppe GP. Das Hauptgetriebe HG des Gruppengetriebes CT der Fig. 1 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit einer steuerbaren Getriebebremse Br versehen ist.

Das Hauptgetriebe HG ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet.

Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils in einem gemeinsamen Schaltpaket S1 bzw. S2 zusammengefasst. Das Hauptgetriebe HG ist unsynchronisiert schaltbar.

Die Vorschaltgruppe bzw. Splitgruppe GV des Gruppengetriebes CT der Fig. 1 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstante des Hauptgetriebes HG bilden. Durch eine geringere Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, als Verbrennungsmotor ausgebildeten Antriebsaggregat in Verbindung steht.

Das Losrad der zweiten Übersetzungsstufe K2 ist drehbar auf der Hauptwelle W_{H} gelagert. Die Festräder beider Übersetzungsstufen K1, K2 der Vorschaltgruppe GV sind jeweils drehfest mit den eingangsseitig verlängerten Vorgelegewellen W_{VG1} und W_{VG2} des Hauptgetriebes angeordnet. Die synchronisiert ausgebildeten Schaltkupplungen der Vorschaltgruppe GV sind in einem gemeinsamen Schaltpaket SV zusammengefasst.

Die dem Hauptgetriebe HG nachgeordnete Bereichsgruppe GP des Gruppengetriebes CT der Fig. 1 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes CT gekoppelt. Das Hohlrad PH steht mit einem Schaltpaket SP mit zwei synchronisierten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe GP ist synchronisiert schaltbar.

An der Vorgelegewelle W_{VG2} des Gruppengetriebes CT kann zum Antreiben eines Nebenabtriebs PTO Leistung abgezweigt werden. Soll zum Antreiben des Nebenantriebs PTO Leistung aus dem Gruppengetriebe CT abgezweigt werden, so wird zum Einschalten bzw. Zuschalten des Nebenabtriebs PTO so vorgegangen, dass zuerst über einen Motoreingriff eine Leerlaufdrehzahl des Antriebsaggregats angefordert wird, dass anschließend das Gruppengetriebe in Neutral geschaltet und die Trennkupplung K geöffnet wird, und dass darauffolgend die Trennkupplung K wieder geschlossen wird, wobei dann, wenn die Trennkupplung K wieder vollständig geschlossen ist, der Motoreingriff zurückgenommen wird.

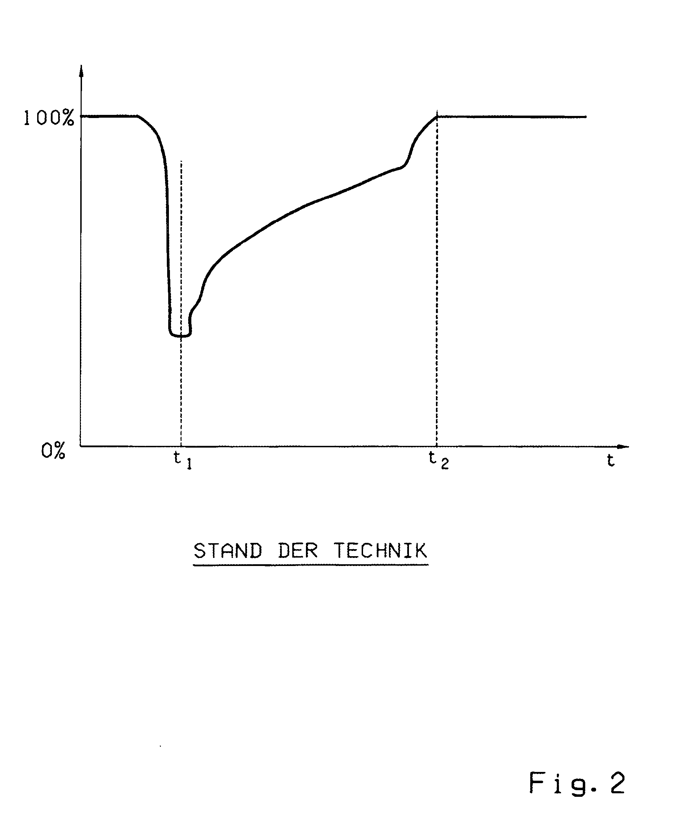

Das Schließen der Trennkupplung K erfolgt dabei nach dem Stand der Technik wie in Fig. 2 gezeigt, wobei im Diagramm der Fig. 2 über der Zeit t eine Kupplungsposition der Trennkupplung K in Prozent aufgetragen ist. Zum Zeitpunkt t₁ wird mit dem Schließen der Trennkupplung K beim Einschalten bzw. Zuschalten des Nebenabtriebs PTO begonnen, wobei zum Zeitpunkt t₂ die Trennkupplung K wieder vollständig geschlossen ist.

Nach dem Stand der Technik erfolgt das Schließen der Trennkupplung K zwischen den Zeitpunkten t₁ und t₂ mithilfe einer Kennlinie abhängig von der Kupplungsposition, die Trennkupplung K wird demnach nach dem Stand der Technik zwischen den Zeitpunkten t1 und t2 mit einer positionsabhängigen bzw. wegabhängigen Kupplungsgeschwindigkeit vollständig geschlossen.

Da das Lastmoment, welches am Nebenabtrieb PTO abgenommen wird, nicht bekannt ist, muss die Kennlinie, mithilfe derer die Trennkupplung K zum Einschalten bzw. Zuschalten des Nebenabtriebs PTO positionsabhängig bzw. wegabhängig geschlossen wird, auf die maximale Last, die am Nebenabtrieb PTO abgezweigt werden kann, ausgelegt werden, um so zu verhindern, dass das Antriebsaggregat beim Schließen der Trennkupplung K abstirbt. Dies hat zur Folge, dass die Trennkupplung K langsam geschlossen wird, mit dem Nachteil, dass bei kleineren am Nebenabtrieb PTO abzunehmenden Lasten die Trennkupplung K eigentlich schneller geschlossen werden könnte. Dies ist von Nachteil.

Eine analoge Problematik ergibt sich auch dann, wenn an anderen Getriebetypen zum Antreiben eines Nebenabtriebs Leistung abgezweigt wird. Obwohl die Erfindung im Zusammenhang mit einem Gruppengetriebe beschreiben ist, soll deren Anwendung nicht auf Gruppengetriebe beschränkt sein, sondern bei beliebigen Getrieben, bei denen zum Antreiben eines Nebenabtriebs Leistung abgezweigt werden kann, verwendet werden können.

Aus der DE 197 08 929 A1 ist ein Verfahren zum Betreiben eines Getriebes bekannt, mit welchem zum Antreiben eines Nebenabtriebs über eine Vorgelegewelle des Gruppengetriebes eine Trennkupplung zunächst geöffnet und anschließend wieder geschlossen wird.

Hiervon ausgehend liegt der vorliegenden Erfindung das Problem zu Grunde, ein neuartiges Verfahren zum Betreiben eines Getriebes eines Kraftfahrzeugs zu schaffen.

Dieses Problem wird durch ein Verfahren gemäß Anspruch 1 gelöst. Erfindungsgemäß wird die Trennkupplung derart geschlossen, dass zunächst die Trennkupplung mit einer positionsabhängigen bzw. wegabhängigen Kupplungsgeschwindigkeit teilweise geschlossen wird, dass während des teilweisen Schließens der Trennkupplung mit der positionsabhängigen bzw. wegabhängigen Kupplungsgeschwindigkeit eine Getriebeeingangsdrehzahl und eine Antriebsaggregatdrehzahl überwacht werden, wobei dann, wenn die Getriebeeingangsdrehzahl in etwa die Antriebsaggregatdrehzahl erreicht hat und die Antriebsaggregatdrehzahl in etwa der Leerlaufdrehzahl des Antriebsaggregats entspricht, die Trennkupplung nicht mehr mit der positionsabhängigen bzw. wegabhängigen Kupplungsgeschwindigkeit sondern mit maximaler Kupplungsgeschwindigkeit vollständig geschlossen wird.

Mit der hier vorliegenden Erfindung wird vorgeschlagen, beim Einschalten bzw. Zuschalten des Nebenabtriebs, die Trennkupplung derart zu schließen, dass zunächst die Trennkupplung mit einer positionsabhängigen bzw. wegabhängigen Kupplungsgeschwindigkeit teilweise geschlossen wird. Bei diesem teilweisen Schließen der Trennkupplung K wird zeitgleich eine Getriebeeingangsdrehzahl und eine Antriebsaggregatdrehzahl überwacht. Dann, wenn die Drehzahl der Getriebeeingangswelle in etwa die Drehzahl des Antriebsaggregats erreicht hat, und wenn weiterhin die Drehzahl des Antriebsaggregats in etwa der Leerlaufdrehzahl desselben entspricht, wird die Trennkupplung K nicht mehr mit der positionsabhängigen bzw. wegabhängigen Kupplungsgeschwindigkeit geschlossen, sondern vielmehr mit maximaler Kupplungsgeschwindigkeit bzw. Schließgeschwindigkeit.

Diese Schließfunktion für die Trennkupplung passt sich automatisch an das am Nebenabtrieb abzunehmende Lastmoment an, sodass die Trennkupplung immer mit minimaler und demnach optimaler Schließzeit geschlossen werden kann.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Schema eines aus dem Stand der Technik bekannten, als Gruppengetriebe ausgebildeten Getriebes eines Kraftfahrzeugs;
- Fig. 2: ein Diagramm zur Verdeutlichung des aus dem Stand der Technik bekannten Verfahrens zum Betreiben eines Getriebes eines Kraftfahrzeugs; und
- Fig. 3: ein Diagramm zur Verdeutlichung des erfindungsgemäßen Verfahrens zum Betreiben eines Getriebes eines Kraftfahrzeugs.

Die hier vorliegende Erfindung betrifft ein Verfahren zum Betreiben eines Getriebes eines Kraftfahrzeugs, insbesondere des in Fig. 1 gezeigten und bereits im Detail beschriebenen, automatisierten Gruppengetriebes CT.

Die Erfindung ist nicht auf Gruppengetriebe beschränkt sondern kann vielmehr auch bei anderen Getrieben zum Einsatz kommen.

Die hier vorliegende Erfindung betrifft solche Details, die das Schließen der Trennkupplung K beim Zuschalten bzw. Einschalten des Nebenantriebs PTO betreffen.

Im Sinne der hier vorliegenden Erfindung wird die Trennkupplung K beim Einschalten bzw. Zuschalten des Nebenabtriebs PTO derart geschlossen, dass zunächst die Trennkupplung K mit einer positionsabhängigen bzw. wegabhängigen Kupplungsgeschwindigkeit teilweise geschlossen wird. Während dieses teilweisen Schließens der Trennkupplung K mit der positionsabhängigen bzw. wegabhängigen Kupplungsgeschwindigkeit werden eine Getriebeeingangsdrehzahl bzw. eine Drehzahl der Getriebeeingangswelle W_{GE} und eine Antriebsaggregatdrehzahl bzw. eine Drehzahl des nicht-gezeigten Antriebsaggregats überwacht.

Dann, wenn die Getriebeeingangsdrehzahl in etwa die Antriebsaggregatdrehzahl erreicht hat und weiterhin die Antriebsaggregatdrehzahl in etwa der Leerlaufdrehzahl des Antriebsaggregats entspricht, wird die Trennkupplung K nicht mehr mit der positionsabhängigen bzw. wegabhängigen Kupplungsgeschwindigkeit geschlossen, sondern vielmehr mit einer maximalen Kupplungsgeschwindigkeit und damit Schließgeschwindigkeit, und zwar bis zum vollständigen Schließen der Trennkupplung K.

Die Getriebeeingangsdrehzahl hat dann in etwa die Antriebsaggregatdrehzahl erreicht, wenn die Abweichung zwischen der Getriebeeingangsdrehzahl und der Antriebsaggregatdrehzahl kleiner als ein erster Grenzwert ist. Die Antriebsaggregatdrehzahl entspricht dann in etwa der Leerlaufdrehzahl des Antriebsaggregats, wenn die Abweichung zwischen der Antriebsaggregatdrehzahl und der Leerlaufdrehzahl des Antriebsaggregats kleiner als ein zweiter Grenzwert ist. Diese beiden Grenzwerte können frei parametriert werden.

Zum Schließen der Trennkupplung K mit maximaler Schließgeschwindigkeit werden Schließventile der Trennkupplung K dauerbestromt, dieselben werden demnach mit einem Dauerpuls restentlüftet, bis die Trennkupplung K vollständig geschlossen ist.

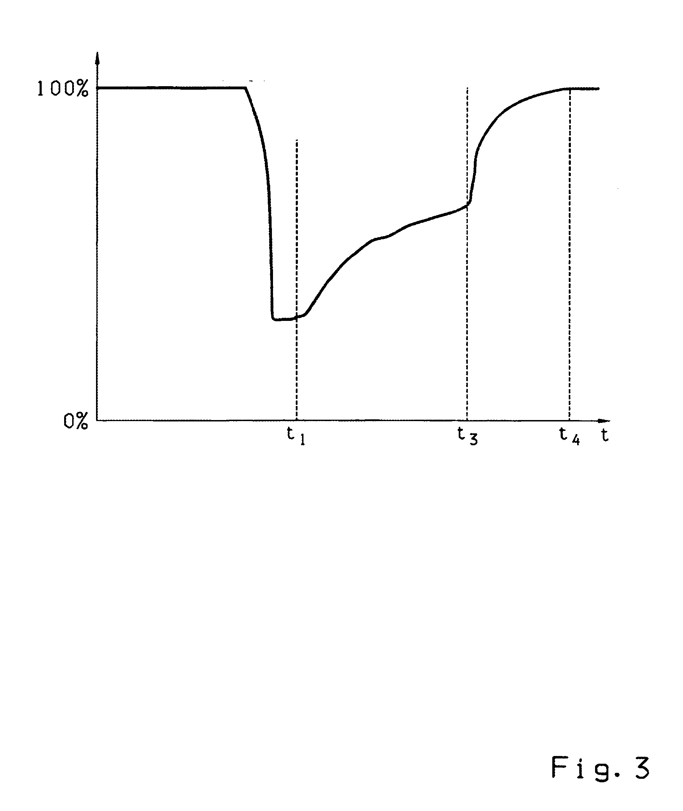

Fig. 3 verdeutlicht das erfindungsgemäße Verfahren anhand eines Diagramms, in welchem über der Zeit t die Schließstellung der Trennkupplung K in Prozent aufgetragen ist. Zum Zeitpunkt t₁ wird mit dem Schließen der Trennkupplung K beim Einschalten bzw. Zuschalten des Nebenabtriebs PTO begonnen. Zwischen den Zeitpunkten t₁ und t₃ wird die Trennkupplung K zunächst mit einer positionsabhängigen bzw. wegabhängigen Kupplungsgeschwindigkeit teilweise geschlossen.

Zum Zeitpunkt t₃ hat die Getriebeeingangsdrehzahl in etwa die Antriebsaggregatdrehzahl erreicht und die Antriebsaggregatdrehzahl entspricht in etwa der Leerlaufdrehzahl des Antriebsaggregats. Beginnend mit dem Zeitpunkt t₃ wird demnach die Trennkupplung K nicht mehr mit der positionsabhängigen bzw. wegabhängigen Kupplungsgeschwindigkeit geschlossen, sondern vielmehr mit maximaler Kupplungsgeschwindigkeit, bis zum Zeitpunkt t₄ die Trennkupplung K vollständig geschlossen ist.

Nach einer vorteilhaften Weiterbildung der hier vorliegenden Erfindung wird zum Zeitpunkt t₃, also dann, wenn die Getriebeeingangsdrehzahl in etwa die Antriebsaggregatdrehzahl erreicht hat und die Antriebsaggregatdrehzahl in etwa der Leerlaufdrehzahl des Antriebsaggregats entspricht, gleichzeitig der Motoreingriff zurückgenommen. Dies ist ein weiterer Unterschied zum Stand der Technik, in welchem der Motoreingriff erst dann zurückgenommen wird, wenn die Trennkupplung K vollständig geschlossen ist.

Das erfindungsgemäße Verfahren erlaubt ein schnelleres Schließen der Trennkupplung K unabhängig von dem am Nebenabtrieb PTO abzunehmenden Lastmoment. Die Schließfunktion für die Trennkupplung K passt sich automatisch an das am Nebenabtrieb PTO abzunehmende Lastmoment an. Es kann immer mit minimaler Kupplungsschließzeit die Trennkupplung geschlossen werden. Durch die frühere Rücknahme des Motoreingriffs hat der Fahrer wieder frühzeitig einen Durchgriff zum Fahrpedal.

## Patentansprüche

1. Verfahren zum Betreiben eines Getriebes eines Kraftfahrzeugs, wobei das Getriebe in einem Antriebsstrang zwischen einem Antriebsaggregat sowie einem Achsantrieb angeordnet ist, wobei eine Eingangswelle des Getriebes über eine steuerbare Trennkupplung (K) mit dem Antriebsaggregat und eine Ausgangswelle des Getriebes mit dem Achsantrieb in Verbindung steht, wobei zum Antreiben eines Nebenabtriebs (PTO) Leistung aus dem Getriebe abgezweigt werden kann, und wobei zum Einschalten bzw. Zuschalten des Nebenabtriebs (PTO) zuerst über einen Motoreingriff eine Leerlaufdrehzahl des Antriebsaggregats angefordert, anschließend das Getriebe in Neutral geschaltet und die Trennkupplung (K) geöffnet und darauffolgend die Trennkupplung (K) wieder geschlossen und der Motoreingriff zurückgenommen wird, **dadurch gekennzeichnet, dass** hierbei die Trennkupplung (K) derart geschlossen wird, dass zunächst die Trennkupplung (K) mit einer positionsabhängigen bzw. wegabhängigen Kupplungsgeschwindigkeit teilweise geschlossen wird, dass während des teilweisen Schließens der Trennkupplung (K) mit der positionsabhängigen bzw. wegabhängigen Kupplungsgeschwindigkeit eine Getriebeeingangsdrehzahl und eine Antriebsaggregatdrehzahl überwacht werden, wobei dann, wenn die Getriebeeingangsdrehzahl in etwa die Antriebsaggregatdrehzahl erreicht hat und die Antriebsaggregatdrehzahl in etwa der Leerlaufdrehzahl des Antriebsaggregats entspricht, die Trennkupplung (K) nicht mehr mit der positionsabhängigen bzw. wegabhängigen Kupplungsgeschwindigkeit sondern mit maximaler Kupplungsgeschwindigkeit vollständig geschlossen wird.

2. Verfahren nach Anspruch 1, **dadurch gekennzeichnet, dass** zum vollständigen Schließen der Trennkupplung (K) mit maximaler Kupplungsgeschwindigkeit Schließventile der Trennkupplung (K) dauerbestromt werden.

3. Verfahren nach Anspruch 1 oder 2, **dadurch gekennzeichnet, dass** dann, wenn die Getriebeeingangsdrehzahl in etwa die Antriebsaggregatdrehzahl erriecht hat und die Antriebsaggregatdrehzahl in etwa der Leerlaufdrehzahl des Antriebsaggregats entspricht, gleichzeitig der Motoreingriff zurückgenommen wird.

4. Verfahren nach einem der Ansprüche 1 bis 3, **dadurch gekennzeichnet, dass** die Getriebeeingangsdrehzahl dann in etwa die Antriebsaggregatdrehzahl erreicht hat, wenn die Abweichung zwischen der Getriebeeingangsdrehzahl und der Antriebsaggregatdrehzahl kleiner als ein erster Grenzwert ist.

5. Verfahren nach einem der Ansprüche 1 bis 4, **dadurch gekennzeichnet, dass** die Antriebsaggregatdrehzahl dann in etwa der Leerlaufdrehzahl des Antriebsaggregats entspricht, wenn die Abweichung zwischen Antriebsaggregatdrehzahl und der Leerlaufdrehzahl kleiner als ein zweiter Grenzwert ist.

6. Verfahren nach einem der Ansprüche 1 bis 5, **dadurch gekennzeichnet, dass** ein Gruppengetriebe betrieben wird, welches mindestens ein mehrstufiges Hauptgetriebe (HG) und eine demselben vor- oder nachgeschalteten Splitgruppe (GV) umfasst, wobei das Hauptgetriebe (HG) in Vorlegebausweise mit mindestens einer Vorgelegewelle (W_{VG1}, W_{VG2}) ausgeführt ist, wobei die Eingangswelle (W_{GE}) des Gruppengetriebes über die steuerbare Trennkupplung (K) mit dem Antriebsaggregat und die Ausgangswelle(W_{GA}) des Gruppengetriebes mit dem Achsantrieb in Verbindung steht, wobei an einer Vorgelegewelle (W_{VG2}) zum Antreiben eines Nebenabtriebs (PTO) Leistung aus dem Gruppengetriebe abgezweigt werden kann.

## Claims

1. Method for operating a transmission of a motor vehicle, wherein the transmission is arranged in a drivetrain between a drive assembly and an axle drive, wherein an input shaft of the transmission is connected via a controllable separating clutch (K) to the drive assembly and an output shaft of the transmission is connected to the axle drive, wherein power can be branched off from the transmission in order to drive a power takeoff (PTO), and wherein to activate the power takeoff (PTO), an idle rotational speed of the drive assembly is firstly demanded by means of an engine intervention, the transmission is subsequently shifted into neutral and the separating clutch (K) is opened, and thereafter the separating clutch (K) is closed again and the engine intervention is withdrawn, **characterized in that**, here, the separating clutch (K) is closed in such a way that firstly the separating clutch (K) is partially closed with a position-dependent or travel-dependent clutch speed, **in that**, during the partial closing of the separating clutch (K) with the position-dependent or travel-dependent clutch speed, a transmission input rotational speed and a drive assembly rotational speed are monitored, wherein when the transmission input rotational speed has approximately reached the drive assembly rotational speed and the drive assembly rotational speed corresponds approximately to the idle rotational speed of the drive assembly, the separating clutch (K) is completely closed no longer with the position-dependent or travel-dependent clutch speed but rather at maximum clutch speed.

2. Method according to Claim 1, **characterized in that**, for the complete closure of the separating clutch (K) at maximum clutch speed, closing valves of the separating clutch (K) are continuously energized.

3. Method according to Claim 1 or 2, **characterized in that**, when the transmission input rotational speed has approximately reached the drive assembly rotational speed and the drive assembly rotational speed corresponds approximately to the idle rotational speed of the drive assembly, the engine intervention is simultaneously withdrawn.

4. Method according to one of Claims 1 to 3, **characterized in that** the transmission input rotational speed has approximately reached the drive assembly rotational speed when the deviation between the transmission input rotational speed and the drive assembly rotational speed is lower than a first threshold value.

5. Method according to one of Claims 1 to 4, **characterized in that** the drive assembly rotational speed corresponds approximately to the idle rotational speed of the drive assembly when the deviation between the drive assembly rotational speed and the idle rotational speed is lower than a second threshold value.

6. Method according to one of Claims 1 to 5, **characterized in that** an auxiliary-range transmission is operated which comprises at least one multi-stage main transmission (HG) and one splitter group (GV) positioned upstream or downstream of said main transmission, wherein the main transmission (HG) is of countershaft type with at least one countershaft (W_{VG1}, W_{VG2}), wherein the input shaft (W_{GE}) of the auxiliary-range transmission is connected via the controllable separating clutch (K) to the drive assembly and the output shaft (W_{GA}) of the auxiliary-range transmission is connected to the axle drive, wherein power can be branched off from the auxiliary-range transmission at a countershaft (W_{VG2}) for driving a power takeoff (PTO).

## Revendications

1. Procédé pour faire fonctionner une boîte de vitesses de véhicule automobile, la boîte de vitesses étant disposée dans une chaîne cinématique entre un groupe d'entraînement et un entraînement d'essieu, un arbre d'entrée de la boîte de vitesses étant relié au groupe d'entraînement par le biais d'un embrayage de coupure (K) commandable et un arbre de sortie de la boîte de vitesses étant relié à l'entraînement d'essieu, la puissance provenant de la boîte de vitesses pouvant être divisée pour entraîner un entraînement en sortie secondaire (PTO) et une vitesse de rotation à vide du groupe d'entraînement étant sollicitée pour connecter et/ou déconnecter l'entraînement en sortie secondaire (PTO) d'abord via une intervention de moteur, puis la boîte de vitesses étant passée au point neutre et l'embrayage de coupure (K) étant ouvert et l'embrayage de coupure (K) étant ensuite de nouveau fermé et l'intervention de moteur étant supprimée, **caractérisé en ce que** l'embrayage de coupure (K) est fermé de telle sorte que l'embrayage de coupure (K) est d'abord en partie fermé à une vitesse d'embrayage dépendant de la position et/ou dépendant de la course, que pendant la fermeture partielle de l'embrayage de coupure (K), une vitesse de rotation d'entrée de boîte de vitesses et une vitesse de rotation de groupe d'entraînement sont surveillées à l'aide de la vitesse d'embrayage dépendant de la position et/ou dépendant de la course, sachant que lorsque la vitesse de rotation d'entrée de boîte de vitesses a atteint approximativement la vitesse de rotation de groupe d'entraînement et que la vitesse de rotation de groupe d'entraînement correspond approximativement à la vitesse de rotation à vide du groupe d'entraînement, l'embrayage de coupure (K) n'est plus entièrement fermé à la vitesse d'embrayage dépendant de la position et/ou dépendant de la course mais à la vitesse d'embrayage maximale.

2. Procédé selon la revendication 1, **caractérisé en ce que** des soupapes de fermeture de l'embrayage de coupure (K) sont alimentées de façon durable à la vitesse d'embrayage maximale pour fermer entièrement l'embrayage de coupure (K).

3. Procédé selon la revendication 1 ou 2, **caractérisé en ce que** lorsque la vitesse de rotation d'entrée de boîte de vitesses a atteint approximativement la vitesse de rotation de groupe d'entraînement et que la vitesse de rotation de groupe d'entraînement correspond approximativement à la vitesse de rotation à vide du groupe d'entraînement, l'intervention du moteur est supprimée simultanément.

4. Procédé selon l'une quelconque des revendications 1 à 3, **caractérisé en ce que** la vitesse de rotation d'entrée de boîte de vitesses a atteint approximativement la vitesse de rotation de groupe d'entraînement lorsque l'écart entre la vitesse de rotation d'entrée de boîte de vitesses et la vitesse de rotation de groupe d'entraînement est inférieur à une première valeur limite.

5. Procédé selon l'une quelconque des revendications 1 à 4, **caractérisé en ce que** la vitesse de rotation de groupe d'entraînement correspond approximativement à la vitesse de rotation à vide du groupe d'entraînement lorsque l'écart entre la vitesse de rotation de groupe d'entraînement et la vitesse de rotation à vide est inférieure à une deuxième valeur limite.

6. Procédé selon l'une quelconque des revendications 1 à 5, **caractérisé en ce qu'**une boîte de vitesses à groupes est entraînée, celle-ci comprenant au moins une boîte de vitesses principale (HG) à plusieurs niveaux et un groupe de division (GV) placé en amont ou en aval de celle-ci, la boîte de vitesses principale (HG) étant réalisée selon une construction avec renvoi avec au moins un arbre de renvoi (W_{VG1}, W_{VG2}), l' arbre d'entrée (W_{GE}) de la boîte de vitesses à groupes étant reliée au groupe d'entraînement par le biais de l'embrayage de coupure (K) commandable et l'arbre de sortie (W_{GA}) de la boîte de vitesses à groupes étant relié à l'entraînement d'essieu, la puissance provenant de la boîte de vitesses à groupes pouvant être divisée au niveau d'un arbre de renvoi (W_{VG2}) pour entraîner un entraînement en sortie secondaire (PTO).
